# FASCICULE DE BREVET EUROPEEN

(11) **EP 3 080 050 B1**
(45) Date de publication et mention de la délivrance du brevet: **16.06.2021**
(21) Numéro de dépôt: 14821764.9
(22) Date de dépôt: 01.12.2014
(51) Int. Cl.: C02F 1/463, B09C 1/08, C02F 11/00, C02F 103/08

(54) **SYSTEME ET PROCEDE DE TRAITEMENT ELECTROCHIMIQUE IN SITU, POUR LE CAPTAGE DES POLLUANTS, LA SEDIMENTATION ET LA DEPOLLUTION DES SITES MARINS CONTAMINES**
SYSTEM UND VERFAHREN ZUR ELEKTROCHEMISCHEN IN-SITU-BEHANDLUNG, ZUR ERFASSUNG VON SCHADSTOFFEN UND ABLAGERUNGEN SOWIE ZUR REINIGUNG VERUNREINIGTER MEERESBEREICHE
SYSTEM AND PROCESS FOR IN SITU ELECTROCHEMICAL TREATMENT, FOR CAPTURING POLLUTANTS, SEDIMENTATION AND CLEANUP OF CONTAMINATED MARINE SITES

(30) Priorité: 13.12.2013 FR 1362617
(43) Date de publication de la demande: 19.10.2016
(73) Titulaire: Geocorail, 13016 Marseille (FR)
(72) Inventeur: BENAISSA, Brahim, F-81370 St Sulpice (FR); VERJAT, Nicolas, F-13001 Marseille (FR); LANSARD, Marc, F-56950 Crac'h (FR)
(74) Mandataire: Loyer & Abello
(86) Numéro de dépôt international: PCT/FR2014/053098
(87) Numéro de publication internationale: WO 2015/086948

(56) Documents cités:
- WO-A2-2008/135987
- FR-A1- 2 882 279
- US-A- 5 865 964
- MATSUMOTO ET AL: "Case study of electrochemical metal removal from actual sediment, sludge, sewage and scallop organs and subsequent pH adjustment of sediment for agricultural use", WATER RESEARCH, ELSEVIER, AMSTERDAM, NL, vol. 41, no. 12, 22 mai 2007 (2007-05-22), pages 2541-2550, XP022088226, ISSN: 0043-1354, DOI: 10.1016/J.WATRES.2007.03.024

## Description

La présente invention se rapporte principalement à un système et un procédé pour la dépollution d'un milieu aquatique ou humide, notamment eau douce, marine ou saumâtre et terrains humides, et le confinement des polluants.

Le document WO 2008/135987 A2 décrit un dispositif permettant de réduire la concentration de composants métalliques dans l'eau contenue dans un réservoir en utilisant une cellule électrolytique et un décanteur.

Lorsque l'on souhaite, maintenir un tirant d'eau suffisant dans un port, on effectue un dragage. Cependant, compte tenu des conditions d'exploitation d'un port, les matières ainsi retirées du fond sont souvent chargées de polluants, notamment de métaux lourds. Dans le passé, les matières draguées étaient rejetées au large, ce qui ne faisait que déplacer et rependre la pollution. Il est dorénavant imposé de traiter et dépolluer les matières ainsi retirées avant de les rejeter dans la nature. Un tel traitement demande des décantations et des procédés longs, coûteux, avec des rendements très faibles ; en outre, les systèmes de traitement occupent une place importante sur les quais et au voisinage du port. On se trouve donc dans une situation où aucun traitement satisfaisant n'existant, certains ports s'envasent, dans l'attente d'une solution satisfaisante.

L'invention a notamment pour but de proposer un système et un procédé permettant de dépolluer un milieu aquatique ou humide, notamment eau douce, marine ou saumâtre et terrains humides ou boueux, et le confinement des polluants, notamment utilisable lors du dévasement d'un port ou d'un cours d'eau.

Selon l'invention, un tel système pour dépolluer un milieu électrolytique aquatique ou humide comprend :
- une structure métallique conductrice formant cathode, disposée dans ledit milieu électrolytique ;
- une anode dans le milieu électrolytique, à une certaine distance de la cathode ;
- un circuit électrique auquel sont connectées ladite cathode et ladite anode ;
- de préférence une source de courant électrique pour alimenter le circuit électrique ;
- des sondes de mesure physico-chimique pour contrôler des évolutions et des cinétiques chimiques dans ledit milieu ;
- des moyens de télésurveillance et/ou de télégestion, permettant la gestion du système à distance ;
- des moyens pour réguler le courant de façon à obtenir sélectivement des conditions favorables à la formation d'un conglomérat sur ladite cathode, lesdites régulations étant asservies aux mesures par lesdites sondes et par des appareils de mesure de paramètres électriques dans ledit circuit, notamment intensité, tension, puissance et/ou fréquence ;
- la structure métallique formant cathode est conçue et disposée de façon à ce que le conglomérat forme un confinement in situ sur ladite cathode, de sorte que des matériaux contaminants ainsi confinés ne puissent être remis en suspension dans le milieu.

Les moyens de télésurveillance et/ou la télégestion permettent avantageusement la télésurveillance, l'envoi d'alarmes et l'historisation par stockage de paramètres dans une base de données.

La structure métallique conductrice formant cathode peut comprendre un canevas formé de fibres métalliques et/ou d'un tissage mixte de fibres conductrices avec des fibres non conductrices, de sorte qu'elle peut aisément être étendue sur un fond marin, notamment.

Selon un autre objet de l'invention, un procédé pour dépolluer un milieu électrolytique aquatique ou humide comprend les étapes suivantes :
- on dispose une structure métallique conductrice formant cathode dans ledit milieu électrolytique ;
- on dispose une anode dans le milieu électrolytique, à une certaine distance de la cathode ;
- on fournit un circuit électrique auquel on connecte ladite cathode et ladite anode ;
- on alimente ledit circuit électrique par un système électrique composé d'une source de courant électrique autonome ou reliée ;
- on positionne dans le milieu ou dans un terrain à proximité des sondes de mesure physico-chimique multi paramètres qui permettent de contrôler les évolutions et les cinétiques chimiques dans ledit milieu ;
- on fournit des moyens pour réguler le courant de façon à obtenir sélectivement des conditions favorables à la formation d'un conglomérat sur la cathode; ces régulations étant asservies aux mesures faites par les sondes et par des appareils de mesure de paramètres électriques dans ledit circuit, notamment intensité, tension, puissance et/ou fréquence ; la structure métallique formant cathode est conçue et disposée de façon à ce que le conglomérat forme un confinement in situ sur ladite structure métallique, de sorte que des matériaux contaminants ainsi confinés ne puissent être remis en suspension dans le milieu ;
- on couple l'ensemble à des moyens de télésurveillance et/ou la télégestion, permettant la gestion du système à distance.

Au lieu de rester in situ, la structure métallique formant cathode peut être retirée du milieu, après formation de conglomérat. Le conglomérat peut alors être utilisé comme matériau valorisable, notamment pour la construction d'ouvrage, de fondation d'un bâtiment, ou d'une chaussée.

Un bloc formé par le conglomérat peut être enduit avec une résine vitrifiante, notamment pour éviter un relargage d'une partie des polluants et/ou pour arrêter la polarisation du bloc.

Un procédé selon l'invention peut être utilisé pour dépolluer des boues, notamment en ajoutant aux boues au moins une substance pour les stabiliser sous la forme d'un matériau solide et/ou pour permettre de coaguler et floculer entre eux des colloïdes que ces boues contiennent, pour faciliter leur agrégation dans la matrice liant les sédiments que ces boues contiennent.

Un procédé de restauration d'un fond marin peut comprendre des étapes pour dépolluer ce fond par un procédé selon l'invention, et en outre au moins une étape pour stabiliser ce fond.

Un procédé de captage de CO₂ peut aussi avantageusement comprendre les étapes d'un procédé de dépollution selon l'invention.

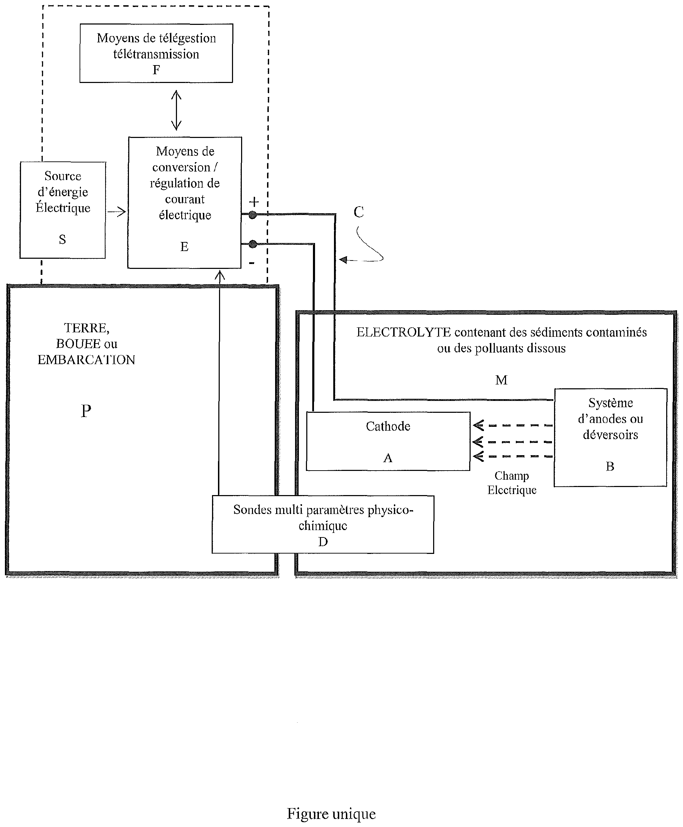

Plusieurs modes d'exécution de l'invention seront décrits ci-après, à titre d'exemples non limitatifs, en référence aux dessins annexés dans lesquels :
- la figure unique est une vue schématique illustrant un procédé selon l'invention.

On sait, notamment du document WO 2005/047571, que la structure métallique formant la partie cathodique d'un système d'électrolyse, au contact avec un milieu aqueux, marin ou saumâtre, se recouvre d'un dépôt de sels, appelé par les spécialistes « calco-magnésien », provoqué par la précipitation sur cette structure de composés, notamment CaCO3 (carbonate de calcium) et Mg(OH)2 (hydroxyde de magnésium), par combinaison d'ions issus d'éléments (Ca, Mg) et gazeux (CO2,O2) dissous dans un milieu électrolytique (eau de mer, terrain conducteur ou dans l'eau saumâtre des lagunes). Le système selon l'invention utilise ce principe et développe un processus de contrôle pour agréger les sédiments de toutes natures autour de ce dépôt.

Comme illustré à la figure, l'invention concerne un système et un procédé de formation d'un liant pour des sédiments entre eux, spécifiquement destiné à la neutralisation des polluants, dans un milieu M électrolytique comprenant des éléments, minéraux, métalliques ou gazeux, qu'ils soient en suspension, dissous ou déposés. Ce procédé comprend des étapes pour :
- disposer une structure métallique A conductrice formant cathode dans le milieu électrolytique M ;
- disposer une anode B dans le milieu électrolytique M, à une certaine distance de la cathode A ;
- fournir un circuit électrique C auquel on connecte la cathode A et l'anode B ;
- alimenter le circuit électrique C par un système électrique composé d'une source de courant électrique S autonome ou reliée à un réseau d'alimentation électrique et d'un système de régulation pour générer un courant électrique continu régulé ;
- positionner dans l'électrolyte ou dans le terrain à proximité des sondes de mesure physico-chimique multi paramètres D qui permettent de contrôler les évolutions et les cinétiques chimiques dans le milieu M ;
- fournir des moyens E pour réguler le courant de façon à obtenir sélectivement les conditions favorables aux réactions chimiques ; ces régulations sont asservies aux mesures faites in situ par les sondes D et par les appareils de mesure du courant électrique (intensité, tension, puissance, fréquence...) ;
- coupler l'ensemble à des moyens F de télésurveillance et/ou la télégestion, permettant la gestion du système à distance ; ces moyens permettent notamment la télésurveillance, l'envoi d'alarmes et l'historisation par stockage de paramètres dans une base de données.

Dans l'exemple illustré, la source d'énergie S, les moyens de conversion et de régulation du courant E et les moyens de télésurveillance et de télégestion et/ou de télésurveillance sont installés sur une plateforme P. Cette plateforme peut être :
- une plateforme terrestre, par exemple un quai sur un port ;
- une bouée ; ou,
- une embarcation, notamment quand le procédé est mis en œuvre au large.

La cathode A, c'est-à-dire la structure polarisée négativement, peut être constituée, suivant les cas :
- d'un grillage en acier noir nu, galvanisé ou non, cuivré en tout ou partie ou non, recouvert ou non d'un métal ou d'oxydes métalliques de potentiels électrochimiques adéquats,
- de métal déployé ou ajouré de même constitution que le grillage ci-dessus,
- d'un assemblage de treillis métalliques, formant des enceintes à l'intérieur desquelles des sédiments aux diverses granulométries auront pu être disposés. Ce gabion peut avoir des formes diverses, par exemple être cubique, rectangulaire, longiforme, cylindrique, en sac, comprendre des polyèdres aux multiples facettes, composé d'un seul ou de plusieurs compartiments ; différentes faces d'un gabion pouvant être électriquement connectées entre elles par soudure, brasure, serrage, vissage ou liaison mécaniques, mais de préférence fabriquées à partir d'une trame grillagé continue ; des dispositions identiques sont prises pour relier plusieurs gabions métalliques entre eux, de préférence de façon à ce que cette liaison soit facile à mettre en œuvre sur de grandes séries, et assure une bonne continuité électrique ; de préférence, les liaisons mécaniques et les liaisons électriques sont dissociées afin que chacune joue sa fonction propre ;
- un micropieu métallique, par exemple utilisé aussi pour soutenir des ouvrages installés sur des fonds instables ;
- tire-fond de renfort de quais maritimes en palplanches ;
- une aiguille métallique ou en une matière conductrice, en forme de peigne ou de râteau, cavaliers, crochets, pitons, destinée à faciliter l'accrochage en aérien des structures cathodiques aux falaises et rochers ou aux ouvrages artificiels à consolider ; ou,
- une combinaison des différentes structures cathodiques et géométries ci-dessus, chacune en un ou plusieurs exemplaires.

Suivant le résultat recherché, les différentes structures cathodiques ci-dessus, qu'elles soient aériennes (en zone de marnages) ou immergées, peuvent être, soit :
- nues, lestées ou fixées par des organes mécaniques de liaisons types clous, vis à sable, tirants d'ancrage au milieu sédimentaire faisant l'objet de la dépollution ;
soit :
- avec une pré-déposition de dépôt calco-magnésien obtenu en atelier, en laboratoire, en usine, ou dans un site fluvial ou maritime de préparation du support sur lequel la partie métallique est déjà recouverte d'un dépôt recouvrant totalement ou partiellement la partie métallique ;
soit :
- recouvertes d'un seul côté, ou des deux côtés, d'une enveloppe perméable à l'eau mais semi-étanche de façon à ne pas laisser filtrer son contenu. Cette enveloppe est réalisée en fibres naturelles ou synthétiques, tissée ou non, armée ou non de fils métalliques ou autres, formant par exemple un sandwich autour de la structure cathodique à la façon d'une housse mince. Elle est en mesure d'être remplie, en partie ou en totalité, par un ballast formé des sédiments à neutraliser, destinés à s'agglomérer au mélange de Carbonate de Calcium, d'Hydroxyde de Magnésium, de Silicates, Aluminates et d'autres ions salins notamment ferreux, déposés naturellement sur les structures cathodiques du système par l'effet des courants de polarisation imposés par le procédé selon l'invention ;
soit :
- -sous forme de matériau mixte fibre/métal, constitué de fibres métalliques seules ou mélangées avec des fibres textiles synthétiques ou naturelles, non conductrices, dans le tissage desquelles sont intercalées des fibres conductrices, pouvant être le siège des réactions cathodiques nécessaires à la synthèse du conglomérat.

Le support siège de la réaction peut être mis en œuvre de manière fixe dans des positionnements divers vis-à-vis de l'environnement :
- Posé de manière fixe sur le substrat du fond marin, ou immergé à mi- eaux.
- Posé perpendiculairement au courant de l'eau tel un tamis et filtrant de manière continue les eaux marines.
- Positionné tel un filtre électrochimique, adaptable par exemple sur un circuit d'évacuation des eaux usées de centres industriels....

Un système selon l'invention peut également comprendre des moyens mobiles et autonomes, tel un drone qui se déplace de manière autonome sur le fond marin des ports, comparable au principe de l'aspirateur de piscine, mais qui vient, pour cette application, capter en continu des particules polluantes. Le drone capteur est avantageusement rechargeable de manière autonome sur une borne alimentée par énergie, de préférence renouvelable, par exemple grâce à la houle.

De préférence, la structure cathodique est conçue de manière à ce que des prélèvements d'échantillons soit possibles au cours de la formation du conglomérat. Ces prélèvements intermédiaires, réalisés périodiquement, permettent de confirmer le bon paramétrage de l'installation et le fonctionnement du captage.
Les prélèvements peuvent être réalisés :
- En prélevant les éprouvettes installées au préalable sur la structure, solidaires ou non de la structure.
- Par carottage en des points ponctuels du conglomérat formé.

Le système peut comprendre une ou plusieurs anodes B, disposées dans le milieu salin, sol ou mer, à proximité de chaque cathode. Chaque anode joue le rôle de déversoir de courant, afin de permettre la polarisation électrique des supports cathodiques.

Les anodes peuvent être des masses métalliques positionnées en étoile, ou reliées ensemble formant un collier. Un câble-anode peut également être choisi pour jouer le même rôle. La position des anodes est déterminée de manière adéquate sur chaque site, en tenant compte des caractéristiques géométriques de l'anode et électro-chimiques du milieu.

Le système peut comprendre une ou plusieurs sources S d'énergie électriques ; elles peuvent être de toute nature, autonomes, embarquées ou connectées à un réseau terrestre de distribution d'énergie. Les énergies renouvelables sont privilégiées lorsque leur compatibilité est avérée.

Parmi des sondes D utilisables déjà connues de l'art antérieur, certaines peuvent être des capteurs permettant de mesurer la compacité, la dureté du conglomérat, la composition des constituants de ce conglomérat, ou, le nombre et la nature des contaminants ou élément chimique, minéral ou biologique marqueur de pollution qui en font partie.

Le choix de paramètres à mesurer pour la régulation est variable selon le site à dépolluer. Un diagnostic est à faire au cas par cas ; par exemple, une campagne de mesure de plusieurs paramètres peut permettre de sélectionner les paramètres donnant des indices de régulation les plus représentatifs du site.

Des sondes D sont positionnées de manière à mesurer les polluants :
- soit dans l'électrolyte M dans lequel est immergée la cathode A ;
- soit à proximité immédiate de la cathode, afin qu'une fois le conglomérat formé, une sonde se retrouve prise à l'intérieur même de l'agrégat, et donne des informations sur les polluants situés à l'intérieur du matériau lui-même.

Des sondes étanches utilisées peuvent soit être reliées aux moyens de régulation par voie câblée, soit être équipées d'une alimentation autonome et transmettre les informations recueillies par ondes électromagnétiques utilisées à fins de transmissions à courtes, moyennes ou longues distances.

Les moyens de conversion et régulation du courant électrique E permettent de piloter et réguler le processus de formation et de maintien dans le temps du matériau capteur de polluants, durant ces périodes. Le fonctionnement du système de régulation du processus sera asservi au résultat de mesures effectuées par les sondes D installées pour détecter les paramètres physico-chimiques requis. L'ensemble régulateur pourra prendre la forme d'une électronique embarquée, pilotée par un paramétrage programmé localement ou à distance.

Le choix des réglages de la régulation, tels la densité de courant ou le potentiel de la structure, en fonction des variables mesurées dans le milieu M, permet de faire précipiter de manière préférentielle un type d'ion en particulier afin d'une part de faciliter l'opération de triage et recyclage et d'autre part d'optimiser les cinétiques de l'opération de dépollution. Les variables mesurées dans le milieu M, peuvent être une composition chimique de l'eau du milieu M, sa température, son acidité, ou une indication de présence d'un polluant ou d'un élément donné dans le milieu M.

Les moyens de télégestion et/ou télétransmission F comprennent avantageusement des moyens de télécommunication. Ainsi, l'ensemble des moyens de pilotage, conversion et régulation de courant peut être en liaison avec une centrale opérationnelle de pilotage ou de relève d'information connectée via un réseau téléphonique, internet, à ondes hertziennes ou dans des longueurs d'onde autorisées pour la transmissions d'informations, permettant le suivi ou le pilotage à distance du système. Ces moyens peuvent en outre être couplés à un compteur électrique comptabilisant la puissance consommée par l'installation, afin de relever les consommations à distance (télé-contrôle).

Pour la mise en œuvre du procédé selon l'invention, on peut prévoir :
- Soit de générer le conglomérat en captant in situ et de l'y laisser, dans un but de confinement et de neutralisation des polluants sur le site. Le matériau ainsi aggloméré formera une coquille rigide autour des sédiments pollués à confiner.
- Soit de générer le matériau captant in situ, sous forme de concrétion, dans le but de sortir la concrétion de sédiments ainsi formée et enfermant les polluants, pour réutilisation du matériau, conglomérat de sédiments faisant l'objet du traitement.
- Soit de réaliser la même opération sur un site dont l'objet n'est pas forcément la dépollution, mais uniquement l'extraction de sédiments non contaminés, et pour lequel ce procédé électrolytique constitue une simple alternative au procédé de dragage traditionnel. Dans ce cas, on considère plus aisé et avantageux de retirer des blocs de conglomérat captant du milieu aquatique, pour faciliter le dragage, que par le biais des voies mécaniques, hydrauliques, mixtes ou autre forme de dragage en vrac traditionnelle ; notamment de tels conglomérats sont sensiblement dépourvus d'eau, ne nécessitant plus de décantation, longue, dans des bassins encombrants.

La mise en œuvre de ce procédé électrolytique est faite en immergeant une structure cathodique A dans la zone à traiter. Cette structure est positionnée soit posée sur le fond marin, soit immergée dans une zone vaseuse, où se trouvent des sédiments à agglomérer. Convenablement disposée à la surface ou au-dessus des sédiments, la cathode A permet de jouer un rôle de coquille emprisonnant les sédiments mous, susceptibles d'être remis en suspension dans le milieu, non encore aggloméré, par exemple lors d'évènements houleux, ou au passage d'engins à fort tirant d'eau, perturbants la courantologie dans le fond, ou remis en suspension par simple gradient thermique dû aux mouvements de masses d'eau entre la surface et le fond du milieu aqueux. Une croute de conglomérat ainsi formée évite la remise en suspension des boues de fond qui sont susceptibles de relâcher, à chaque cycle, des contaminants dans les eaux situées plus proches de la surface, ces contaminants remués étant susceptibles d'atteindre la chaîne trophique de l'écosystème. Une telle coquille peut être retirée ou laissée en place.

La structure cathodique A peut être immergée plus profondément dans les zones troubles, sièges de décantation des fonds marins.

Lorsque la durée de mise en œuvre du procédé aura été suffisamment longue pour que le conglomérat atteigne une taille souhaitée, le conglomérat ainsi formé peut être retiré de l'eau par grutage depuis le quai dans le cas d'un port ou au moyen d'une barge adaptée. Si la cathode a été positionnée par simple lestage, la grue devra être d'une capacité suffisante pour relever la structure couverte du conglomérat captant ainsi formé, ainsi que ses lests originaux. Un dispositif d'élingage peut être maintenu en place pendant toute la durée de l'opération ou alors un plongeur est mis à contribution pour l'arrimage de la structure.

Si la structure a été fixée sur le fond marin par un procédé de fixation mécanique, par exemple une vis à sable, un tirant d'ancrage ou des clous : soit on utilise une grue d'une capacité suffisante afin de vaincre la résistance mécanique du dispositif d'ancrage, ou bien un plongeur, ou système mécanique embarqué équivalent, peut aller cisailler les ancrages, avant l'opération de levage. Dans la mesure du possible, l'ancrage est conçu de manière à ce qu'il puisse être désolidarisé de la structure cathodique et que l'ancrage ne soit pas forcément le siège de la réaction électrolytique formant le conglomérat. Dès lors que le bloc de matériau captant est retiré du milieu aquatique, on le charge dans une barge ou un camion. Cette opération et le transport sont facilités par une tenue mécanique de la structure, contrairement au classique transport en vrac de sédiments issus de dragage.

L'eau interstitielle présente dans le matériau est présente en faibles quantité. L'opération de ressuage est par conséquent relativement rapide, et la densité du matériau après quelques heures hors d'eau est vite assez proche de la densité réelle du matériau à sec. Cette rapidité présente un avantage certain dans la chaîne logistique de réutilisation du matériau. Le matériau peut être lessivé à l'eau douce afin de supprimer les sulfates et chlorures dues à la seule eau interstitielle, et de diminuer ainsi la teneur en sulfate et chlorure du matériau résiduel.

La taille des structures cathodiques est avantageusement adaptée en fonction d'une réutilisation éventuellement prévue pour le conglomérat qui va s'y former. On peut ainsi obtenir, en une seule pièce, un conglomérat de quelques kilogrammes à plusieurs centaines de tonnes.

Le procédé électrochimique permet également le captage du dioxyde de carbone (CO2) dissous dans le milieu M. Ce piégeage entraîne un déplacement de l'équilibre gazeux à l'interface liquide atmosphère. Le déficit en CO₂ dans le milieu entraîne une augmentation de pH, donc une diminution de l'acidité du milieu, et un déplacement de l'équilibre calco-carbonique. Le milieu aquatique M revient vers son équilibre en captant du CO₂ atmosphérique, contribuant ainsi à la diminution du CO₂ présent dans l'atmosphère. En complément de ce piégeage de CO₂, la dépollution du site et la mise en œuvre du procédé va dans le sens d'une restauration écologique du milieu marin, par consolidation d'un substrat propice à l'implantation de la flore sous-marine, et dans le cas d'essences compatibles avec la stimulation électrochimique, la croissance biologique se révèle stimulée et accélérée par le procédé selon l'invention.

Le conglomérat obtenu par le procédé de dépollution selon l'invention peut être valorisé.

Lorsque le matériau captant formé est retiré du milieu aquatique, il est soumis à la même réglementation que tout sédiment extrait d'un fond aquatique. Les mêmes analyses réglementaires pourront y être faites et les mêmes destinations permises par les techniques et la réglementation peuvent être envisagées et appliquées. Le matériau captant, c'est-à-dire le conglomérat résultant du procédé mis en œuvre, une fois caractérisé en termes de tenue, composition, stabilisation et innocuité des polluants, pourra donc être dirigé vers les différentes filières autorisées par la réglementation. Selon les résultats d'analyses de composition physico-chimique, d'essais de lixiviation, de percolation, et d'autres études spécifiques pour la caractérisation du matériau, il pourra être réutilisé en remblais dans la construction des routes, recouvert ou non d'un enrobé ou recouvert ou non d'une couche supérieure d'un autre matériau dument autorisé, ou réutilisé à l'état brut dans la construction, la réhabilitation, la restauration ou la rénovation d'ouvrages terrestres, maritimes, fluviaux ou sous-marins. Le matériau captant ainsi formé est une voie de valorisation des sédiments de dragage, caractérisée par une vraie valorisation permettant la réutilisation des matériaux, et non une simple dilution des agents polluants combinés avec d'autres éléments, simplement pour en diminuer les valeurs de concentrations dans le milieu.

Le procédé peut notamment permettre de re-classifier le matériau en un déchet moins nocif, le faisant passer du statut de « matériau non inerte dangereux », à « matériau non inerte non dangereux » ou à « matériau inerte ».

Une fois caractérisé mécaniquement et chimiquement et déclaré sans risque chimique ou éco-toxicologique, le matériau captant peut rejoindre les filières de revalorisation destinées aux sédiments de dragage tels que rechargements de plage ou de terre-pleins, utilisation en remblais dans le bâtiment ou les travaux publics, matériaux de construction, épandage agricole, ré-immersion pour constitution de récifs artificiels, tripodes, enrochements de digues.

En vue de sa valorisation, le matériau issu de ce procédé électrolytique peut subir un traitement chimique, par exemple un traitement acide pour la dissolution du liant calco-magnésien. Il peut aussi subir un traitement thermique pour extraire et traiter les différents alliages de métaux.

En fonction des concentrations en éléments métalliques, les propriétés physiques du matériau issu de ce procédé peuvent être exploitées par voie de revalorisation :
Si sa densité est élevée :
Création de lest ou de corps morts pour l'ancrage ou la stabilisation d'une infrastructure.

Si sa conductivité électrique supérieure à celle d'un matériau de substitution classique :
- Remblai pour fondation et sol situé aux alentours des prises terre et paratonnerre pour favoriser l'évacuation vers le sol de l'énergie électrique issue de la foudre ou de court-circuit ;
- Remblai pour fondation et sous-sol situés sous les rails de chemin de fer ou de tramway pour limiter la diffusion de courant vagabonds en les drainant au travers de sols plus conducteurs ;
- Création de sol conducteur permettant le passage de courant électrique sous-terrain ou de surface afin par exemple de sécuriser un espace clôt contre toute intrusion ou comptabiliser un nombre de passages ;
- Création d'un sol conducteur pour stimuler par des champs électriques ou de petits électrochocs de faible ampérage la croissance de plantes ou le développement d'espèces s'y trouvant.

Si son inertie thermique permet l'accumulation de la chaleur :
- Matériaux de construction des dalles de maison afin d'améliorer l'inertie thermique du chauffage domestique et donc le confort de la maison ;
- Remblai et fondation de cavité sous-terraine utilisé pour conserver jusqu'en hiver les eaux chauffées en été par l'accumulation de chaleur issue par exemple du réchauffement du béton noir des routes ;
- Roche rayonnante pour balisage et repérage infrarouge de sites d'intervention militaire camouflés.

Si sa conductivité thermique est supérieure à celle d'un matériau de substitution classique :
- Remblai pour fondation sollicité thermiquement par d'importants apports énergétiques à diffuser (plateforme de lancement de fusée, sous-sol/fondation d'usine avec traitements thermique (hauts fourneaux,...).

S'il est imperméable aux ondes électromagnétiques :
- Matériau de constitution d'un bouclier de brouillage visant à isoler des chambres contre les fuites d'ondes électromagnétiques provoquées par des activités électroniques humaines ou des machines.

Différents contaminants ou polluants peuvent être captés et neutralisés par le procédé selon l'invention et emprisonnés dans le conglomérat captant sont de toutes formes et tous types.

Le captage des éléments chimiques se fait par deux mécanismes rendus possibles par les dispositions constructives présentées précédemment :
- Premièrement, le captage des éléments et molécules chimiques dissous. Ces éléments dissous sont précipités par voie électrochimique. Le précipité sous forme solide ainsi obtenu est alors aggloméré au matériau, et au liant calco-magnésien. Le champ électrique facilite le déplacement des ions et autres particules chargés, qui s'orientent selon les lignes de champs et la polarité fixées.
- Deuxièmement, le captage des contaminants fixés, absorbés ou adsorbés à la surface de sédiments. C'est la sédimentation de ces matériaux pollués au sein du conglomérat lié par ciment calco-magnésien, qui permet le captage et emprisonnement de ce type de contaminants.

Le matériau agglomère les composés naturellement présents dans les sédiments. Tous les métaux et leurs oxydes métalliques associés, éléments traces d'éléments chimiques biens connus dans la classification périodique, notamment ceux dont la présence en milieu naturel est suivi dans la recherche de contaminants, en particulier l'Arsenic, le Cadmium, le Chrome, le Cuivre, le Mercure, le Nickel, le Plomb, le Zinc, le Molybdène, l'Antimoine, le Sélénium.

Peuvent aussi être emprisonnés par le procédé, tous les éléments issus de la chimie de synthèse, tirés ou non des hydrocarbures, notamment utilisés comme produits d'entretien, de traitement, détergents, pesticides, médicaments, métabolisants, produits anti-fouling, biocides, drogues, floculants, coagulants, lubrifiants ; Notamment ceux dont la présence dans le milieu naturel est suivi dans la recherche de contaminants, tels que le TBT (Tributylétain), les HAP (Hydrocarbures Aromatiques Polycliniques), les PCB (PolyChloroBiphényles) couramment identifiés ainsi que tous leurs congénères et dérivés, perturbateurs endocriniens, tous polluants classifiés comme faisant partie des CMR (Cancérogènes, Mutagènes et toxiques pour la Reproduction).

En plus d'éléments chimiques, des organismes vivants autotrophes sont susceptibles d'être piégés dans la matrice du conglomérat. Etant donné le lieu d'utilisation du procédé, en zone polluée, ces organismes vivants sont contaminés par les polluants et leur piégeage représente également une protection du milieu, en évitant qu'ils ne rentrent dans la chaîne alimentaire, contaminant ainsi les autres espèces.

Les sédiments agrégés par ce procédé électrochimique peuvent notamment être :
- Des résidus d'anodes sacrificielles ;
- Des particules métalliques oxydées ou non, issues de la décomposition d'infrastructures portuaires (palplanches, épaves, armatures de béton, infrastructures,...) ;
- Des déchets radioactifs issus des centrales nucléaires dans un agrégat solide composé de matière limitant les rayonnements radioactifs. Traitement de neutralisation avant stockage sécurisé ;
- Des particules métalliques radioactives dissoutes dans l'eau de mer ;
- Des résidus issus de marées noires ;
- Des microparticules contenues dans les hydrocarbures permettant ainsi de limiter le dégagement de microparticules dans l'atmosphère lors de la combustion de carburants dans les moteurs thermiques.

Bien sûr, l'invention n'est pas limitée aux exemples qui viennent d'être décrits.

Ainsi, la structure cathodique peut être soit simplement lestée pour reposer sur le fond, soit ancrée via des vis à sables ou tirants d'ancrages ou cloutage ou chevilles chimiques, directement ou grâce à des sangles ou feuillards métalliques.

En outre, l'invention permet de favoriser, tout en la contrôlant et régulant, la constitution d'un agrégat, destiné au captage et à la dépollution des fonds marins, fluviaux ou terrains humides dans :
- les ports, anses, criques, calanques, baies, rades, fleuves, cours d'eaux, étangs, lagunes, lacs dont les sédiments reposant sur le fond sont susceptibles de s'accumuler et de présenter une contamination.
- les sites offshores, île ou ouvrage artificiels dont la mise en place par l'homme a pu générer sur place une quelconque pollution, de nature à déstabiliser l'équilibre sédimentaire, chimique et biologique local.
- tout site qui a classiquement besoin d'être dépollué par opération de dragage et pour lequel la présente invention peut constituer un processus de substitution en traitant tout ou partie du problème in situ, avant extraction et mise à l'atmosphère du sédiment considéré, en le retirant de son environnement sous-marin.
- tout site dont le besoin n'est pas forcément de retirer la pollution mais où l'objectif recherché et de la confiner à l'endroit même où elle se trouve, en évitant sa mise en suspension, en la neutralisant et la rendant inerte, ou tout au moins en réduisant son impact nocif sur l'environnement.
- tout site dont l'objectif recherché est la stabilisation du fond sédimentaire en une assise solide, et pour lequel le double enjeu recherché est la capture des polluants.
- tout site qui n'est pas encore ou peu pollué, mais pour lequel le système est mis en place, en prévention d'une pollution à venir, ou pour faciliter l'analyse ultérieure des couches sédimentaires historiquement superposées, ainsi piégées dans un marqueur de pollution.
- tout site industriel, agricole, urbain ou touristique générant des écoulements d'eau fortement polluée et chargée notamment en métaux lourd nécessitant le captage de particule grossière ou dissoute dans l'électrolyte pour se conformer aux législation en vigueur, filtrer les écoulements pour assurer la qualité des activités en aval, limiter les rebus et pertes de matière voir améliorer l'efficacité économique du procédé.
- toute retenue d'eau, mer, lagune, ruisseaux entourant les sites d'extraction minière ou canalisation d'évacuation des eaux utilisées pour l'extraction ou le rinçage des outils d'extraction dans les mines de mine nickel, d'or,...
- Tout site d'extraction gazeuse ou pétrolière générant des écoulements d'eaux ou de boues fortement chargées de sédiments, vases, d'argiles et résidus pétrolifères polluants ou autres sédiments lourds difficilement séparables de l'eau par les procédés traditionnels tels que la décantation, ou le filtrage,...

Le procédé selon l'invention est applicable à la dépollution des sites pour lesquels le dragage simple ne constitue plus une solution économiquement intéressante, à cause du coût de retraitement des boues et sédiments de dragage.

Le procédé selon l'invention qui permet la formation du matériau électrolytique servant au captage, employé seul ou en combinaison avec d'autres procédés de dépollution, favorise et permet de contrôler dans leurs différentes phases, la constitution, la prise et le développement progressif du matériau sur un grillage léger ou tout autre type de système cathodique immergé sur le site considéré. Il devient ainsi possible en un seul procédé de :
- neutraliser les polluants,
- stabiliser le fond sédimentaire,
- capter le CO₂,
- consolider l'assise des ouvrages fluviaux ou maritimes,
- restaurer un fond sous-marin via une granulométrie multi-échelle adaptée aux différents types d'organismes vivants, pour servir de niche, nurserie et refuge contre les prédateurs.

## Revendications

1. Système pour dépolluer un milieu électrolytique (M) aquatique ou humide, comprenant :
- une structure métallique (A) conductrice formant cathode, disposée dans ledit milieu électrolytique (M) ;
- une anode (B) dans le milieu électrolytique M, à une certaine distance de la cathode (A) ;
- un circuit électrique (C) auquel sont connectées ladite cathode (A) et ladite anode (B) ;
- de préférence une source de courant électrique (S) pour alimenter le circuit électrique ;
- des sondes de mesure physico-chimique (D) pour contrôler des évolutions et des cinétiques chimiques dans ledit milieu (M) ;
- des moyens (F) de télésurveillance et/ou de télégestion, permettant la gestion du système à distance ;
ledit système étant **caractérisé en ce qu'**il comprend
- des moyens (E) pour réguler le courant de façon à obtenir sélectivement des conditions favorables à la formation d'un conglomérat sur ladite cathode, lesdites régulations étant asservies aux mesures par lesdites sondes et par des appareils de mesure de paramètres électriques dans ledit circuit, notamment intensité, tension, puissance et/ou fréquence ;
et **en ce que** la structure métallique formant cathode est conçue et disposée de façon à ce que le conglomérat forme un confinement in situ sur ladite cathode, de sorte que des matériaux contaminants ainsi confinés ne puissent être remis en suspension dans le milieu (M).

2. Système selon la revendication 1, **caractérisé en ce que** les moyens de télésurveillance et/ou la télégestion, permettent notamment la télésurveillance, l'envoi d'alarmes et l'historisation par stockage de paramètres dans une base de données.

3. Système selon l'une des revendications 1 ou 2, **caractérisé en ce que** la structure métallique (A) conductrice formant cathode comprend un canevas formé de fibres métalliques et/ou d'un tissage mixte de fibres conductrices avec des fibres non conductrices.

4. Système selon l'une des revendications 1 à 3, **caractérisé en ce qu'**il comprend au moins une sonde (D) disposée à proximité immédiate de la cathode, afin qu'une fois le conglomérat formé, ladite sonde se retrouve prise à l'intérieur même dudit conglomérat, et donne des informations sur les polluants situés à l'intérieur dudit conglomérat.

5. Procédé pour dépolluer un milieu électrolytique (M) aquatique ou humide, **caractérisé en ce qu'**il comprend les étapes suivantes :
- on dispose une structure métallique (A) conductrice formant cathode dans ledit milieu électrolytique (M) ;
- on dispose une anode (B) dans le milieu électrolytique (M), à une certaine distance de la cathode (A) ;
- on fournit un circuit électrique (C) auquel on connecte ladite cathode (A) et ladite anode (B) ;
- on alimente ledit circuit électrique (C) par un système électrique composé d'une source de courant électrique (S) autonome ou reliée ;
- on positionne dans le milieu (M) ou dans un terrain à proximité des sondes de mesure physico-chimique multi paramètres (D) qui permettent de contrôler les évolutions et les cinétiques chimiques dans ledit milieu (M) ;
on fournit des moyens (E) pour réguler le courant de façon à obtenir sélectivement des conditions favorables à la formation d'un conglomérat sur la cathode; ces régulations étant asservies aux mesures faites par les sondes (D) et par des appareils de mesure de paramètres électriques dans ledit circuit, notamment intensité, tension, puissance et/ou fréquence ; la structure métallique formant cathode est conçue et disposée de façon à ce que le conglomérat forme un confinement in situ sur ladite structure métallique, de sorte que des matériaux contaminants ainsi confinés ne puissent être remis en suspension dans le milieu (M).
- on couple l'ensemble à des moyens (F) de télésurveillance et/ou la télégestion, permettant la gestion du système à distance.

6. Procédé selon la revendication 5, **caractérisé en ce que** les moyens de télésurveillance et/ou la télégestion, permettent notamment la télésurveillance, l'envoi d'alarmes et l'historisation par stockage de paramètres dans une base de données.

7. procédé selon l'une des revendications 5 ou 6, **caractérisé en ce que** l'on dispose au moins une sonde (D) à proximité immédiate de la cathode, afin qu'une fois le conglomérat formé, ladite sonde se retrouve prise à l'intérieur même dudit conglomérat, et donne des informations sur les polluants situés à l'intérieur dudit conglomérat.

8. Procédé selon l'une des revendications 5 à 7, **caractérisé en ce que** la structure métallique formant cathode est retirée du milieu, après formation de conglomérat.

9. Procédé selon la revendication 8, **caractérisé en ce que** le conglomérat est utilisé comme matériau valorisable, notamment pour la construction d'ouvrage, de fondation d'un bâtiment, ou d'une chaussée.

10. Procédé selon l'une des revendications 5 à 9, **caractérisé en ce que** l'on enduit un bloc formé par le conglomérat avec une résine vitrifiante, notamment pour éviter un relargage d'une partie des polluants et/ou pour arrêter la polarisation dudit bloc.

11. Procédé pour dépolluer des boues avec un procédé selon l'une des revendications 5 à 10, **caractérisé en ce que** l'on ajoute aux boues au moins une substance pour stabiliser lesdites boues en un matériau solide, ou pour permettre de coaguler et floculer des colloïdes entre eux, pour faciliter l'agrégation de ces colloïdes dans la matrice liants les sédiments.

12. Procédé de restauration d'un fond marin, **caractérisé en ce qu'**il comprend des étapes pour dépolluer ledit fond par un procédé selon l'une des revendications 5 à 7, et en outre au moins une étape pour stabiliser ledit fond.

13. Procédé de captage de CO₂, **caractérisé en ce qu'**il comprend un procédé selon l'une de revendications 5 à 10.

## Patentansprüche

1. System zur schadstoffbezogenen Sanierung eines wässrigen oder feuchten elektronenleitenden Milieus (M), umfassend:
- eine leitfähige metallische Struktur (A), welche die Kathode bildet, wobei sie in dem elektronenleitenden Milieu (M) angeordnet ist;
- eine Anode (B) in dem elektronenleitenden Milieu M, in einer bestimmten Entfernung zu der Kathode (A) ;
- einen Stromkreis (C), an welchen die Kathode (A) und die Anode (B) angeschlossen sind;
- vorzugsweise eine elektrische Stromquelle (S) zur Versorgung des Stromkreises;
- physikalisch-chemische Messsonden (D) zur Überprüfung der Veränderungen und der Kinetik chemischer Vorgänge in dem Milieu (M);
- Mittel (F) zur Fernüberwachung und/oder zum Fernbetrieb, die es ermöglichen, das System aus der Ferne zu betreiben;
wobei das System **dadurch gekennzeichnet ist, dass** es Folgendes umfasst
- Mittel (E), um den Strom derart zu regulieren, dass auf selektive Weise Bedingungen erzielt werden, welche die Bildung einer Zusammenlagerung an der Kathode begünstigen, wobei diese Regulierungsvorgänge in Abhängigkeit von den Messungen durch die Sonden und durch Vorrichtungen zur Messung von elektrischen Kenngrößen in dem Kreis, insbesondere der Stromstärke, der Spannung, der Leistung und/oder der Frequenz, erfolgen;
und dadurch, dass die metallische Struktur, welche die Kathode bildet, derart ausgelegt und angeordnet ist, dass die Zusammenlagerung einen in-situ-Einschluss an der Kathode bildet, sodass verunreinigende Stoffe, welche auf diese Weise eingeschlossen wurden, nicht wieder in dem Milieu (M) in Suspension gelangen können.

2. System nach Anspruch 1, **dadurch gekennzeichnet, dass** die Mittel zur Fernüberwachung und/oder zum Fernbetrieb insbesondere die Fernüberwachung, den Versand von Alarmmeldungen und die chronologische Speicherung von Kenngrößen in einer Datenbank ermöglichen.

3. System nach einem der Ansprüche 1 oder 2, **dadurch gekennzeichnet, dass** die leitfähige metallische Struktur (A), welche die Kathode bildet, ein grobes Gewebe, welches aus Metallfasern gebildet ist, und/oder einen Mischwebstoff leitfähiger Fasern mit nicht-leitenden Fasern umfasst.

4. System nach einem der Ansprüche 1 bis 3, **dadurch gekennzeichnet, dass** es mindestens eine Sonde (D) umfasst, die in unmittelbarer Nähe der Kathode angeordnet ist, sodass die Sonde nach der Bildung der Zusammenlagerung im Inneren ebendieser Zusammenlagerung eingeschlossen ist und Informationen über die Schadstoffe gibt, welche sich im Inneren dieser Zusammenlagerung befinden.

5. Verfahren zur schadstoffbezogenen Sanierung eines wässrigen oder feuchten elektronenleitenden Milieus (M), **dadurch gekennzeichnet, dass** es die folgenden Schritte umfasst:
- Anordnen einer leitfähigen metallischen Struktur (A), welche die Kathode bildet, in dem elektronenleitenden Milieu (M);
- Anordnen einer Anode (B) in dem elektronenleitenden Milieu (M), in einer bestimmten Entfernung zu der Kathode (A);
- Bereitstellen eines Stromkreises (C), an welchen die Kathode (A) und die Anode (B) angeschlossen werden;
- Versorgen des Stromkreises (C) durch ein elektrisches System, das sich aus einer autonomen oder angeschlossenen elektrischen Stromquelle (S) zusammensetzt;
- Anordnen, in dem Milieu (M) oder in einem nahegelegenen Erdreich, von physikalisch-chemischen Messsonden für mehrere Kenngrößen (D), welche es ermöglichen, die Veränderungen und die Kinetik chemischer Vorgänge in dem Milieu (M) zu überprüfen;
- Bereitstellen von Mitteln (E), um den Strom derart zu regulieren, dass auf selektive Weise Bedingungen erzielt werden, welche die Bildung einer Zusammenlagerung an der Kathode begünstigen; wobei diese Regulierungsvorgänge in Abhängigkeit von den Messungen erfolgen, wie sie durch die Sonden (D) und durch Vorrichtungen zur Messung von elektrischen Kenngrößen in dem Kreis, insbesondere der Stromstärke, der Spannung, der Leistung und/oder der Frequenz, vorgenommen werden; die metallische Struktur, welche die Kathode bildet, ist derart ausgelegt und angeordnet, dass die Zusammenlagerung einen in-situ-Einschluss an der metallischen Struktur bildet, sodass verunreinigende Stoffe, welche auf diese Weise eingeschlossen wurde, nicht wieder in dem Milieu (M) in Suspension gelangen können.
- Ankoppeln der Gesamtheit an Mitteln (F) zur Fernüberwachung und/oder zum Fernbetrieb, sodass das System aus der Ferne betrieben werden kann.

6. Verfahren nach Anspruch 5, **dadurch gekennzeichnet, dass** die Mittel zur Fernüberwachung und/oder zum Fernbetrieb insbesondere die Fernüberwachung, den Versand von Alarmmeldungen und die chronologische Speicherung von Kenngrößen in einer Datenbank ermöglichen.

7. Verfahren nach einem der Ansprüche 5 oder 6, **dadurch gekennzeichnet, dass** mindestens eine Sonde (D) in unmittelbarer Nähe der Kathode angeordnet wird, sodass diese Sonde nach der Bildung der Zusammenlagerung im Inneren ebendieser Zusammenlagerung eingeschlossen ist und Informationen über die Schadstoffe gibt, welche sich im Inneren dieser Zusammenlagerung befinden.

8. Verfahren nach einem der Ansprüche 5 bis 7, **dadurch gekennzeichnet, dass** die metallische Struktur, welche die Kathode bildet, nach der Bildung der Zusammenlagerung aus dem Milieu entnommen wird.

9. Verfahren nach Anspruch 8, **dadurch gekennzeichnet, dass** die Zusammenlagerung als verwertbares Material verwendet wird, insbesondere zum Erstellen von Bauwerken, von Fundamenten eines Gebäudes oder im Straßenbau.

10. Verfahren nach einem der Ansprüche 5 bis 9, **dadurch gekennzeichnet, dass** ein Block, welcher aus der Zusammenlagerung gebildet ist, mit einem versiegelnd wirkenden Harz überzogen wird, um insbesondere eine Freisetzung eines Teils der Schadstoffe zu verhindern und/oder um die Polarisierung des Blocks zu unterbinden.

11. Verfahren zur schadstoffbezogenen Sanierung von Schlämmen mit einem Verfahren nach einem der Ansprüche 5 bis 10, **dadurch gekennzeichnet, dass** den Schlämmen mindestens eine Substanz zugesetzt wird, um die Schlämme zur Stabilisierung in einen Feststoff umzuwandeln oder um eine Koagulation und Flockung von Kolloiden untereinander derart zu ermöglichen, dass die Anlagerung dieser Kolloide in der Matrix erleichtert wird, welche die Sedimente bindet.

12. Verfahren zur Wiederherstellung eines Meeresbodens, **dadurch gekennzeichnet, dass** es Schritte zur schadstoffbezogenen Sanierung des Bodens durch ein Verfahren nach einem der Ansprüche 5 bis 7 und darüber hinaus mindestens einen Schritt zur Stabilisierung dieses Bodens umfasst.

13. Verfahren zur CO₂-Abscheidung, **dadurch gekennzeichnet, dass** es ein Verfahren nach einem der Ansprüche 5 bis 10 umfasst.

## Claims

1. System for depolluting an aquatic or wet electrolytic environment (M)comprising:
- a conductive metal structure (A) forming a cathode, disposed in said electrolytic environment (M);
- an anode (B) in the electrolytic environment (M), at a certain distance from the cathode (A);
- an electrical circuit (C) to which said cathode (A) and said anode (B) are connected;
- preferably, an electric current source (S) for supplying the electrical circuit;
- physicochemical measurement sensors (D) for controlling chemical changes and kinetics in said environment (M);
- remote monitoring and/or remote management means (F), enabling the system to be managed remotely;
the system being **characterized in that** it comprises:
- means (E) for regulating the current so as to selectively obtain conditions favourable to the formation of a conglomerate on said cathode, said regulations being slaved to the measurements by said sensors and by apparatus for measuring electrical parameters in said circuit, in particular current, voltage, power and/or frequency;
and **in that** the metal structure forming the cathode is designed and disposed so that the conglomerate forms an in-situ confinement, so that contaminating materials thus confined cannot be put back in suspension in the environment (M).

2. System according to claim 1, **characterised in that** the remote monitoring and/or remote management means in particular allow remote monitoring, the sending of alarms and historisation by storage of parameters in a database.

3. System according to one of claims 1 or 2, **characterised in that** the conductive metal structure (A) forming a cathode comprises a canvass formed by metal fibres and/or a mixed weaving of conductive fibres with nonconductive fibres.

4. System according to one of claims 1 to 3, **characterised in that** it comprises at least one sensor (D) disposed in the immediate vicinity of the cathode so that, once the conglomerate is formed, said sensor is held actually inside said conglomerate, and gives information on the pollutants situated inside said conglomerate.

5. Method for depolluting an aquatic or wet electrolytic environment (M), **characterised in that** it comprises the following steps:
- a conductive metal structure (A) forming a cathode is disposed in said electrolytic environment (M);
- an anode (B) is disposed in the electrolytic environment (M), at a certain distance from the cathode (A);
- an electrical circuit (C) is provided, to which said cathode (A) and said anode (B) are connected;
- said electrical circuit (C) is supplied by an electrical system composed of a self-contained or connected source of electric current (S);
- multiparameter physicochemical measurement sensors (D) are positioned in the environment (M) or in terrain close by, which make it possible to monitor chemical changes and kinetics in said environment (M);
- means (E) are provided for regulating the current so as to selectively obtain conditions favourable to the formation of a conglomerate; these regulations being slaved to the measurements made by the sensors (D) and by apparatus for measuring electrical parameters in said circuit, in particular current, voltage, power and/or frequency, the metal structure forming the cathode is designed and disposed so that the conglomerate forms an in-situ confinement, so that contaminating materials thus confined cannot be put back in suspension in the environment (M);
- the whole is coupled to remote monitoring and/or remote management means (F), enabling the system to be managed remotely.

6. Method according to claim 5, **characterised in that** the remote monitoring and/or remote management means in particular allow remote monitoring, the sending of alarms and historisation by storage of parameters in a database.

7. Method according to one of claims 5 or 6, **characterised in that** at least one sensor (D) is disposed in the immediate vicinity of the cathode so that, once the conglomerate is formed, said sensor is held actually inside said conglomerate, and gives information on the pollutants situated inside said conglomerate.

8. Method according to one of claims 5 to 7, **characterised in that** the metal structure forming a cathode is removed from the environment after the conglomerate is formed.

9. Method according to claim 8, **characterised in that** the conglomerate is used as a reprocessable material, in particular for building structures, a building foundation or a roadway.

10. Method according to one of claims 5 to 9, **characterised in that** a block formed by the conglomerate is coated with a vitrifying resin, in particular to prevent re-salting of part of the pollutants and/or for stopping biasing of said block.

11. Method for depolluting sludge with a method according to one of claims 5 to 10, **characterised in that** at least one substance is added to the sludge for stabilising said sludge as a solid material, or for making it possible to coagulate and flocculate colloids with each other, to facilitate the aggregation of these colloids in the matrix binding the sediment.

12. Method for restoring a seabed, **characterised in that** it comprises steps for depolluting said bed by a method according to one of claims 5 to 7, and furthermore at least one step for stabilising said bed.

13. Method for capturing CO₂, **characterised in that** it comprises a method according to one of claims 5 to 10.
